# EUROPÄISCHE PATENTSCHRIFT

(11) **EP 3 667 237 B1**
(45) Veröffentlichungstag und Bekanntmachung des Hinweises auf die Patenterteilung: **21.07.2021**
(21) Anmeldenummer: 19208870.6
(22) Anmeldetag: 13.11.2019
(51) Int. Cl.: G01C 21/34

(54) **BESTIMMUNG EINER WEITEREN ERPROBUNGSROUTE WÄHREND EINER ERPROBUNGSFAHRT EINES FAHRZEUGS**
DETERMINATION OF A FURTHER TEST ROUTE DURING A TEST DRIVE OF A VEHICLE
DÉTERMINATION D'UNE AUTRE VOIE D'ESSAI PENDANT UNE CONDUITE D'ESSAI DE VÉHICULE

(30) Priorität: 13.12.2018 DE 102018221708
(43) Veröffentlichungstag der Anmeldung: 17.06.2020
(73) Patentinhaber: Volkswagen AG, 38440 Wolfsburg (DE)
(72) Erfinder: Grober, Florian, 37581 Bad Gandersheim (DE)

(56) Entgegenhaltungen:
- DE-A1- 10 031 787
- DE-A1-102014 003 973
- US-A1- 2018 201 077

## Beschreibung

Die Erfindung betrifft ein Verfahren, eine Vorrichtung und ein Computerprogrammprodukt zur Bestimmung einer weiteren Erprobungsroute während einer Erprobungsfahrt eines Fahrzeugs zum Erreichen eines Belastungszielwertes.

Im Dauerfahrversuch, auch Fahrzeugdauerlauf genannt, werden Fahrzeuge in der Entwicklungsphase auf ihre Haltbarkeit geprüft. Dazu wird das Fahrzeug üblicherweise von einem Testfahrer auf einem festgelegten Kurs auf einem Prüfgelände oder auf öffentlichen Straßen bewegt. Auf diesem Kurs muss das Fahrzeug eine definierte Laufleistung, also eine vorgegebene Kilometeranzahl schadensfrei zurücklegen, um für die Produktion freigegeben werden zu können. Die Gestaltung des Erprobungskurses folgt nach verschiedenen Kriterien, vor allem aber nach den im Betrieb beim Kunden zu erwartenden Belastungen. Solche Prüfungsverfahren sind beispielsweise aus DE 10 2014 003973 A1, DE 100 31 787 A1 und US 2018/201077 A1 bekannt. Dieses Vorgehen weist eine Vielzahl von Nachteilen auf.

Zunächst ist die Schädigung von Bauteilen an und/oder im Fahrzeug abhängig von den auf das Fahrzeug einwirkenden Belastungen. Erfolgt der Dauerversuch auf einem fest definierten Erprobungskurs, insbesondere auf einem Prüfgelände, ist dabei aber lediglich die Streckenführung, die Geschwindigkeit und die Fahrbahnunebenheit vorgegeben. Die eigentlichen Belastungen für das Fahrzeug, wie Kräfte, Momente, Beschleunigungen und dergleichen, sind somit nur mittelbar festgelegt. Es kann dadurch nicht gewährleistet werden, dass ein vorgesehener Belastungseintrag auf das Fahrzeug erfolgt.

Je nach Fahrzeugtyp können die Einwirkungen auf das Fahrzeug aufgrund der konstruktiven Gestaltung eines Fahrzeugs zu unterschiedlich hohen Belastungen führen. Daher wird versucht, die Erprobungskurse für möglichst viele Fahrzeugtypen allgemeingültig zu gestalten, was in der Praxis nicht immer gelingt.

Weitere Einflüsse auf den Belastungseintrag ergeben sich aus schichtbedingten Fahrerwechseln, Einflüssen aus Witterungsverhältnissen und unplanmäßigen Veränderungen auf dem Erprobungskurs, wie zum Beispiel Baustellen und Umleitungen auf dem Erprobungskurs.

Weitere Schwierigkeiten ergeben sich durch die monotone und ermüdende, also wenig ergonomische Wirkung eines sich immer wiederholenden Erprobungskurses auf den Fahrer und die aus Sicherheitsgründen begrenzte Anzahl von Erprobungsfahrzeugen auf einem Erprobungskurs zur gleichen Zeit.

Zusammenfassend kann also nicht gewährleistet werden, dass die vorgesehenen Belastungen tatsächlich auf das zu erprobende Fahrzeug einwirken, also welche Belastungen durch das Befahren der Strecke wirklich auf das Fahrzeug wirken, und/oder dass die Durchführung hinsichtlich ökonomischer und ergonomischer Gesichtspunkte optimiert ist.

Im Stand der Technik sind in diesem Zusammenhang verschiedene Vorschläge offenbart, durch die die genannten Probleme gelöst werden sollen.

In Grünitz et al., "Ermittlung der Betriebsbelastungen elektromechanischer Lenkgetriebe mittels belastungserfassender Software", in: DVM-Berichte Nr. 134, Berlin, 2007, S. 89 ff. wird eine Methode beschrieben, wie durch ein Lenkungssteuergerät unter Anwendung von Zählfunktionen klassierte Daten über die im Betrieb auftretenden Belastungen der ServoLenkung gesammelt werden können. Diese dienen aber lediglich einer Belastungsüberwachung im Kundenbetrieb.

In Teutsch, R. et al., "Einsatzspezifische Erprobung als Baustein zur Verringerung des Fahrzeuggewichtes von Lastkraftwagen", in: DVM-Berichte Nr. 138, Clausthal-Zellerfeld, 2011, S. 189 ff., und Weber, M. et al., "A new way to customer loads correlation and testing in truck engineering of Daimler trucks", in: chassis.tech plus, München, 2010, wird ein Fahrerleitsystem für die Erprobung von Lastkraftwagen vorgestellt, durch das ein Erprobungskurs je nach Einsatzzweck individuell aus verschiedenen Streckenabschnitten eines Prüfgeländes zusammengesetzt wird. Das Fahrerleitsystem ermittelt die Position aller auf dem Prüfgelände befindlichen Fahrzeuge und berechnet für jedes aktuell die optimale Route hinsichtlich Auslastung des Erprobungsgeländes und zur Vermeidung von Kollisionen. Es wird jedoch keine Gewährleistung oder gar Optimierung des Belastungseintrages auf das Fahrzeug offenbart.

Aus Heiden, M. et al., "Erkenntnisgewinn durch die Überwachung von Schädigungseintrag und Spitzenlasten während eines realen Fahrzeugdauerlaufs", in: DVM-Berichte Nr. 141, Ingolstadt, 2014, S. 173 ff., ist die Ausstattung von Fahrzeugteilen mit Messtechnik, insbesondere mit Dehnmessstreifen bekannt, die nach den Erprobungsfahrten ausgewertet werden. Die Auswertung ist die Basis für eine Berechnung einer Betriebsfestigkeitskennzahl, der sogenannten Pseudo-Schädigung des Fahrzeugs. Aus den Kennwerten lässt sich im Zusammenhang mit der zurückgelegten Laufleistung des Fahrzeugs bestimmen, ob der Belastungseintrag gleichbleibend erfolgte, die Erprobungsqualität also konstant war, und ob die eingetragene Belastung und die damit erreichte Schädigung innerhalb eines vorgegebenen Zielkorridors liegt. Die Betrachtung erfolgt aber rückwirkend für die erfolgten Erprobungsfahrten, so dass die oben genannten Probleme auch in dieser Offenbarung nicht gelöst werden.

Weiterhin sind aus dem Stand der Technik verschiedene Methoden bekannt, mittels derer eine Routenauswahl anhand von Streckenparametern wie Kurvigkeit, Steigung oder Geschwindigkeitsbegrenzungen erfolgen kann, jedoch erfolgt die Routenauswahl lediglich im Hinblick auf energieoptimiertes Fahren oder einen vom Fahrer gewünschten Charakter der Streckenführung. Einige der Methoden zielen dabei zwar auch darauf ab, eine Belastungscharakteristik für Erprobungsfahrten bereitzustellen, jedoch erfolgt dies stets ohne Bezug zu den tatsächlich einwirkenden Belastungen auf das Fahrzeug beziehungsweise die zu erreichende Gesamtbelastung.

Die Probleme bei der Optimierung der Fahrzeugerprobung, nämlich die Erfüllung der vorgesehenen Belastungen individuell für das Fahrzeug in Zusammenhang mit den realen Bedingungen während der Erprobungsfahrten, und die ergonomische und ökonomische Gestaltung von Erprobungsfahrten, bleiben im Stand der Technik ungelöst.

Der Erfindung liegt daher die Aufgabe zugrunde, Methoden und Mittel zu ihrer Umsetzung aufzuzeigen, so dass eine individuelle, auf das Fahrzeug und die tatsächlich eingetragenen Belastungen abgestimmte Erprobungsroute vorgegeben werden kann, mittels derer die vorgesehenen Belastungen erreicht werden können, wobei die Ermittlung der optimalen Route in Echtzeit während der Erprobungsfahrt erfolgt.

Die Aufgabe der Erfindung wird erfüllt durch ein Verfahren nach Anspruch 1, eine Vorrichtung nach Anspruch 7 und ein Computerprogrammprodukt nach Anspruch 10. Weitere bevorzugte Ausgestaltungen der Erfindung ergeben sich aus den übrigen, in den Unteransprüchen genannten Merkmalen.

Zunächst soll das Wort "Belastungen" und seine Verwendung im Sinne der Anmeldung erläutert werden. Unter Belastungen sollen im Folgenden alle Einflüsse auf ein Fahrzeug, die seine Lebensdauer beziehungsweise die Lebensdauer seiner Komponenten beeinflussen können, verstanden werden. Die Bezeichnung beschränkt sich daher nicht nur auf Kräfte und Momente im bekannten und üblichen Sinne, sondern kann beispielsweise die Anzahl der Überrollungszyklen von Kugellagern oder im Hinblick auf Elektrofahrzeuge auch Stromflüsse bedeuten. Es sollen auch Größen oder Einflüsse unter dem Begriff Belastungen verstanden werden, aus denen sich Kräfte und/oder Momente ableiten lassen, wie beispielsweise Fahrzeugbeschleunigungen. In einer weiten Auslegung kann unter Belastung auch das Auftreten von Situationen und damit Belastungen, die für zu erprobende Funktionen relevant sind, verstanden werden.

Bei einem erfindungsgemäßen Verfahren zur Bestimmung einer weiteren Erprobungsroute für ein Fahrzeug zum Erreichen eines Belastungszielwertes während einer Erprobungsfahrt anhand von in das Fahrzeug eingetragenen Belastungen werden mittels einer Berechnungseinheit mindestens die folgenden Schritte ausgeführt:
- Verknüpfung einer von einer Positionsbestimmungseinrichtung ermittelten Position des Fahrzeugs auf einem Straßenabschnitt, Straßeninformationen über diesen Straßenabschnitt aus einer Speichereinrichtung und von in das Fahrzeug eingetragenen mittels einer Sensoreinrichtung erfassten Belastungen zur Bestimmung eines Belastungskennwertes für diesen Straßenabschnitt,
- Abrufen eines Erprobungsstandes des Fahrzeugs aus der Speichereinrichtung,
- Berechnung eines aktualisierten Erprobungsstandes des Fahrzeugs aus dem abgerufenen Erprobungsstand und dem Belastungskennwert, und Hinterlegen des aktualisierten Erprobungsstandes in der Speichereinrichtung,
- Bestimmung von Abbiegemöglichkeiten am Ende des Straßenabschnitts und eines Nutzwertes jeder der Abbiegemöglichkeiten zum Erreichen des Belastungszielwertes anhand der Straßeninformationen und in der Speichereinrichtung hinterlegten erwartbaren Belastungen für das Fahrzeug,
- Auswahl der Abbiegemöglichkeit mit dem höchsten Nutzwert zum Erreichen des Belastungszielwertes.

Das Verfahren soll also während einer Erprobungsfahrt durchgeführt werden, so dass in Echtzeit eine weitere Erprobungsroute ermittelt wird. Mit weiterer Erprobungsroute ist der weitere Verlauf der Strecke gemeint, die ein Fahrer des Fahrzeugs vom gegenwärtigen Standort aus befahren soll. Ziel des Verfahrens ist es dabei, dass die Strecke in Abhängigkeit von den bereits in das Fahrzeug eingetragenen Belastungen so gewählt wird, dass ein zuvor definierter Belastungszielwert, also eine Gesamtheit von in das Fahrzeug einzubringenden Belastungen, möglichst effizient erreicht wird. Der Belastungszielwert kann also auch als maximal zu erreichender Erprobungsstand bezeichnet werden. Der Belastungszielwert wird beispielweise in Kenntnis der zukünftigen Anforderungen an das Fahrzeug und die zukünftige Verwendung des Fahrzeugs festgelegt. Die Erprobung eines Fahrzeugs ist abgeschlossen, wenn der Belastungszielwert erreicht ist.

Die Erprobungsfahrt kann dabei sowohl auf einem Erprobungsgelände, insbesondere einem abgeschlossenen Erprobungsgelände, als auch auf öffentlichen Straßen oder einer Kombination aus beidem durchgeführt werden.

Zur Durchführung des erfindungsgemäßen Verfahrens verknüpft eine geeignete Berechnungseinheit eine von einer Positionsbestimmungseinrichtung ermittelte Position des Fahrzeugs auf einem Straßenabschnitt, Straßeninformationen zu diesem Straßenabschnitt aus einer Speichereinrichtung und von einer Sensoreinrichtung erfasste Belastungen des Fahrzeugs.

Ein Straßenabschnitt soll dabei ein Teil eines Straßenverlaufs sein, dessen charakteristische Eigenschaften im Wesentlichen gleich bleiben. Insbesondere wird ein Straßenabschnitt durch Kreuzungspunkte, an denen weitere Straßenabschnitte abzweigen oder abbiegen, begrenzt. Jeder dieser abgehenden Straßenabschnitte wird nachfolgend als Abbiegemöglichkeit bezeichnet. Auch das Geradeausfahren an einem solchen Kreuzungspunkt soll dabei als Abbiegemöglichkeit verstanden werden.

Sowohl die Position des Fahrzeugs, als auch die erfassten Belastungen können als Daten aus einer eigenständigen Positionsbestimmungseinrichtung beziehungsweise Sensoreinrichtung empfangen und verarbeitet werden. Dazu sollten diese mit einer geeigneten Datenschnittstelle ausgebildet sein, die eine Übermittlung der erfassten Daten an die Berechnungseinheit und eine Weiterverarbeitung durch sie ermöglicht. Ein derartiges eigenständiges Gerät kann beispielsweise ein GPS-Empfänger sein, der eine Position des Fahrzeugs in GPS-Koordinaten ermittelt, aber auch die Positionsbestimmungseinrichtung eines Mobiltelefons, das im Fahrzeug mitgeführt wird, und zum Datenaustausch mit der Berechnungseinheit ausgebildet ist. Die Berechnungseinheit kann aber auch selbst mit Sensoren und/oder einer internen Positionsbestimmungseinrichtung, die die Position des Fahrzeugs bestimmt, ausgebildet sein, so dass die Sensoren Messwerte erfassen beziehungsweise die interne Positionsbestimmungseinrichtung eine Position bestimmen, die direkt weiter verarbeitet werden.

Die Positionsdaten und die eingetragenen Belastungen werden mit Straßeninformationen über den Straßenabschnitt, auf dem sich das Fahrzeug befindet, verknüpft. Die Straßeninformationen sind im Wesentlichen eine digitale Straßenkarte in Form einer Liste befahrbarer Straßenabschnitte und deren charakteristischer Eigenschaften. Befahrbar bedeutet dabei, dass das Befahren der Straße mit einem Fahrzeug möglich ist, und besonders bevorzugt auch, dass der Straßenabschnitt innerhalb eines festgelegten Erprobungsgebietes liegt, in dem Erprobungsfahrten durchgeführt werden können. Eine Reduzierung auf ein vorgegebenes Erprobungsgebiet kann sinnvoll sein, wenn das Fahrzeug am Ende einer Schicht eines Fahrers an seinen Ausgangspunkt zurückkehren muss und somit nur eine bestimmte Entfernung zu diesem Ausgangspunkt zurückgelegt werden kann.

Anhand der zuvor ermittelten Position des Fahrzeugs ruft die Berechnungseinrichtung dazu die Straßeninformationen, die beispielsweise die Länge, Steigung und Kurvigkeit eines Straßenabschnittes beschreiben, zu dem Straßenabschnitt, auf dem sich das Fahrzeug befindet, aus der Speichereinrichtung ab. Diese Speichereinrichtung kann Teil der Berechnungseinheit sein, oder separat ausgebildet und mit der Berechnungseinheit verbunden sein.

Diese Straßeninformationen werden zur Bestimmung eines Belastungskennwertes zu dem Straßenabschnitt, auf dem sich das Fahrzeug befindet, mit den in das Fahrzeug eingetragenen und durch die Sensoreinrichtung erfassten Belastungen und den Positionsdaten verknüpft. Darunter soll verstanden werden, dass die Sensordaten den charakteristischen Eigenschaften des Straßenabschnittes und der jeweiligen konkreten Position des Fahrzeugs zugeordnet werden. Durch die Anwendung mathematischer Funktionen, insbesondere Klassierfunktionen wie beispielsweise Rainflow-Zählung, Klassengrenzenüberschreitungszählung, Bereichspaarzählung, Verweildauerzählung, Häufigkeitszählung, und Berechnungsmethoden der Betriebsfestigkeit, wie beispielsweise die lineare Schadensakkumulation, kann die Berechnungseinheit die tatsächlich aufgetretenen und in das Fahrzeug eingetragenen Belastungen berechnen. Es kann daher beispielsweise die Einwirkung eines Kurvenradius oder einer Neigung des Straßenabschnittes auf das Fahrzeug bestimmt und mit den zugleich erfassten Sensordaten die damit tatsächlich erreichte Belastung ermittelt werden. Aus den jeweiligen erfassten Belastungen wird der Belastungskennwert für diesen Straßenabschnitt bestimmt.

Bei Einwirken einer Vielzahl von Belastungen auf das Fahrzeug zum gleichen Zeitpunkt kann auch die Bildung eines Belastungskollektivs, also einer Vielzahl von Belastungskennwerten, die sich auf eine oder mehrere Belastungsarten beziehen, erfolgen. Die Belastungskollektive können in gleicher Weise in dem Verfahren verwendet werden, wie ein Belastungskennwert.

Nachfolgend wird daher der Begriff "Belastungskennwert" sowohl als solcher, als auch gleichbedeutend mit dem Begriff "Belastungskollektiv" beziehungsweise "Belastungskollektive" verwendet.

Aus der Speichereinrichtung wird ein Erprobungsstand des Fahrzeugs abgerufen. Dieser Erprobungsstand gibt wieder, welche Belastungen insgesamt bereits auf das Fahrzeug gewirkt haben. Der Erprobungsstand gibt also die tatsächlich bereits in das Fahrzeug eingebrachten Belastungen wieder. Diese Belastungen können während der zu diesem Zeitpunkt durchgeführten Erprobungsfahrt, aber auch durch eine zuvor, also früher durchgeführte Erprobungsfahrt ermittelt worden sein. Der Erprobungsstand kann dabei auch für einzelne Belastungsarten getrennt erfasst und fortgeschrieben werden, oder als Erprobungsstand für alle eingetragenen Belastungen insgesamt.

Aus diesem abgerufenen Erprobungsstand und dem ermittelten Belastungskennwert wird ein aktualisierter Erprobungsstand berechnet. Im einfachsten Fall wird der Belastungskennwert zu dem abgerufenen Erprobungsstand addiert und die Summe ergibt den aktualisierten Erprobungsstand. Es sind aber auch komplexere Berechnungsmethoden möglich, die äußere Einflüsse während der Erprobungsfahrt berücksichtigen, beispielsweise durch gewichtete Einflussfaktoren.

Der aktualisierte Erprobungsstand wird in der Speichereinrichtung hinterlegt. Er wird also in der Speichereinrichtung gespeichert. Dabei kann der vorher abgerufene Erprobungsstand überschrieben werden, oder jeder weitere aktualisierte Erprobungsstand nacheinander, insbesondere mit einer Information über den Zeitpunkt des Erreichens dieses Erprobungsstandes, gespeichert werden.

Anhand der Position des Fahrzeugs und der dazu in der Speichereinrichtung verfügbaren Straßeninformationen werden nun die Abbiegemöglichkeiten zu dem Straßenabschnitt, auf dem sich das Fahrzeug befindet, abgerufen. Es wird also geprüft, welche Abbiegemöglichkeiten sich am Ende des gerade befahrenen Straßenabschnittes anschließen. Anhand der charakteristischen Werte des Straßenabschnittes aus der Speichereinrichtung, und ebenfalls in der Speichereinrichtung hinterlegten erwartbaren Belastungen für die sich an den derzeit befahrenen Straßenabschnitt anschließenden Straßenabschnitte kann im Hinblick auf den für das Fahrzeug noch zu erreichenden Belastungszielwert, also die Gesamtheit von in das Fahrzeug einzutragenden Belastungen, und dem aktualisierten Erprobungsstand ein Nutzwert für jede der Abbiegemöglichkeiten bestimmt werden. Dieser Nutzwert beschreibt dabei den Beitrag, den jede der Abbiegemöglichkeiten und die sich damit anschließenden Straßenabschnitte für die Erreichung des Belastungszielwertes leistet, also welche der Abbiegemöglichkeiten am ehesten zum Erreichen des Belastungszielwertes führt.

Kriterien für die Bestimmung des Nutzwertes können bevorzugt die folgenden Fragestellungen sein:
- Wie stark würde das Befahren des Straßenabschnittes zum Erreichen des Belastungszielwertes beitragen?
- Können dort hohe Belastungen erzielt werden, die anderswo nur selten möglich sind, beispielsweise durch sehr enge Kurven?
- Ist der Erprobungsstand für eine Belastungsart besonders niedrig, so dass diese bevorzugt eingefahren werden sollte?
- Welcher Aufwand hinsichtlich Zeit und/oder Entfernung ist mit dem Befahren des Straßenabschnittes verbunden?

Zu erwartende beziehungsweise erwartbare Belastungen sind Belastungseinträge auf das Fahrzeug, die aufgrund der Charakteristika eines Straßenabschnittes mit hoher Wahrscheinlichkeit auf das Fahrzeug wirken werden.

Die Nutzwerte für die verschiedenen, sich an den derzeit befahrenen Straßenabschnitt anschließenden Abbiegemöglichkeiten werden verglichen und die Abbiegemöglichkeit, und der sich daran anschließende Straßenabschnitt mit dem höchsten Nutzwert zum Erreichen des Belastungszielwertes ausgewählt.

Mit dem erfindungsgemäßen Verfahren kann also während einer Erprobungsfahrt eine weitere Erprobungsroute bestimmt werden, die unter Berücksichtigung der tatsächlich bereits in das Fahrzeug eingetragenen Belastungen, den dadurch erreichten aktualisierten Erprobungsstand und der zu erwartenden Belastungen in einem nachfolgenden Straßenabschnitt so gewählt ist, dass damit möglichst effektiv und ökonomisch der angestrebte Belastungszielwert erreicht wird.

Gleichzeitig kann so auch auf äußere Einflüsse reagiert werden und die weitere Erprobungsroute angepasst werden, wie nachfolgend noch erläutert wird. Zudem kann eine Erprobungsfahrt auf diese Weise so gestaltet werden, dass die Strecke abwechslungsreich und für den Fahrer des Fahrzeugs nicht durch stete Wiederholung gleicher Straßenabschnitte ermüdend wirkt.

In einer ersten Ausführungsvariante ist vorgesehen, dass die Abbiegemöglichkeit mit dem höchsten Nutzwert auf einer Ausgabeeinheit an den Fahrer des Fahrzeugs ausgegeben wird. Beispielsweise kann die Information über die ausgewählte Abbiegemöglichkeit visuell, akustisch und/oder taktil an den Fahrer des Fahrzeugs übermittelt werden. Dazu kann die Berechnungseinrichtung mit einer Ausgabeeinheit ausgebildet oder mit einer Ausgabeeinheit verbunden sein. Diese Ausgabeeinheit kann zum Beispiel in einer Ausgestaltung ähnlich eines bekannten Navigationssystems verwirklicht sein, so dass der Fahrer mittels Pfeilen und/oder Markieren der bevorzugten Abbiegemöglichkeit auf einer Kartenansicht und/oder durch Ansagen der bevorzugten Abbiegemöglichkeit entlang der so bestimmten weiteren Erprobungsroute geführt werden kann.

In einer anderen Ausführungsvariante wird der ermittelte Belastungskennwert eines Straßenabschnittes in der Speichereinrichtung hinterlegt. Der wie vorstehend erläutert bestimmte Belastungskennwert wird also nicht nur zur Bestimmung eines aktualisierten Erprobungsstandes verwendet, sondern auch in die Speichereinrichtung übermittelt und dort gespeichert. Somit kann ein solcher Belastungskennwert beispielsweise verwendet werden, wenn eine Erprobungsroute zum Erreichen eines Ausgangspunktes oder eines Zwischenziels oder bei einer Wiederholung der Erprobungsroute wieder entlang des selben Straßenabschnittes geführt werden muss, um die erwartbaren Belastungen zu ergänzen und/oder zu aktualisieren. Der ermittelte Belastungskennwert zu jedem befahren Straßenabschnitt kann also für zukünftige Fahrten als erwartbare Belastung verwendet werden.

In einer nächsten Ausführungsvariante ist vorgesehen, dass die erwartbaren Belastungen für das Fahrzeug durch frühere Erprobungsfahrten ermittelt wurden. Die in der Speichereinrichtung hinterlegten Belastungskennwerte müssen also nicht nur aus der aktuell durchgeführten Erprobungsfahrt stammen, wie zuvor erläutert wurde, sondern können auch aus der Ermittlung während einer davor durchgeführten Erprobungsfahrt verwendet werden. Insbesondere werden erwartbare Belastungen bevorzugt, die mit demselben oder einem sehr ähnlichen Fahrzeug ermittelt wurden. Ein sehr ähnliches Fahrzeug soll ein Fahrzeug mit im Wesentlichen ähnlichen Eigenschaften sein.

Alternativ oder ergänzend können bei Fehlen geeigneter Daten bezüglich erwartbarer Belastungen diese durch die Anwendung von Methoden der Mathematik, der Physik und/oder der Künstlichen Intelligenz, wie beispielsweise mittels Regressionsanalyse oder neuronalen Netzen anhand der vorhandenen Straßeninformation und gegebenenfalls bereits abgespeicherten Belastungskennwerten geschätzt werden.

Eine übernächste Ausführungsvariante sieht vor, dass die Straßeninformationen charakteristische Informationen eines Straßenabschnittes, insbesondere Name der Straße, zugehörige GPS-Koordinaten, Straßentyp, zulässige Höchstgeschwindigkeit, Länge, Krümmung, Neigung, Untergrundmaterial, Untergrundrauigkeit und/oder vorhandene Hindernisse, enthalten. Unter Hindernissen sollen in diesem Zusammenhang alle baulichen Merkmale der Verkehrsinfrastruktur, insbesondere des befahrenen Straßenabschnittes, verstanden werden, die aufgrund der durch sie verursachten Fahrmanöver für einen Belastungseintrag in das Fahrzeug relevant sein können. Dazu gehören insbesondere Bodenerhöhungen, Bodenvertiefungen, Bahnübergänge, Schikanen, Fahrbahnverengungen, Fußgängerüberwege, Ampeln, Stopp-Schilder und dergleichen. Diese charakteristischen Werte erlauben es in Verbindung mit den durch die Sensoreinrichtung erfassten eingetragenen Belastungen, einen sehr präzisen Belastungskennwert unter Berücksichtigung einer Vielzahl individueller Kennwerte eines Straßenabschnittes zu bestimmen, die jeder für sich die eingetragene Belastung beeinflussen. Der Belastungskennwert, und somit auch die erwartbaren Belastungen auf noch nicht befahrenen Straßenabschnitten mit vergleichbaren oder sehr ähnlichen charakteristischen Eigenschaften können somit noch präziser bestimmt werden.

Weitere Informationen, die zur Bestimmung beziehungsweise Charakterisierung des Belastungskennwertes und zu seiner Dokumentation, also dem Abspeichern in der Speichereinrichtung, herangezogen werden können, sind Informationen über das Wetter während der Erprobungsfahrt, die Verkehrsdichte während der Erprobungsfahrt, und/oder ob die Probefahrt während Feiertagen, Ferienzeiten und/oder während des Berufsverkehrs durchgeführt wurde. Diese weiteren Informationen können von besonderem Vorteil für die Bestimmung der weiteren Erprobungsroute sein, um in Abhängigkeit der während der gerade durchgeführten Erprobungsfahrt herrschenden Bedingungen abzuschätzen, ob vergleichbare Bedingungen vorliegen und damit auch vergleichbare Belastungseinträge, oder unter Umständen auch im Hinblick auf den Belastungszielwert besser geeignete Belastungseinträge erreicht werden können.

In einer besonders bevorzugten Ausführungsvariante wird für jede Abbiegemöglichkeit von n aufeinanderfolgenden Straßenabschnitten ein Teilnutzwert, und daraus für jede Kombination der n aufeinanderfolgenden Straßenabschnitte ein Nutzwert ermittelt, und die Kombination mit dem höchsten Nutzwert zum Erreichen des Belastungszielwertes ausgewählt.

In Abhängigkeit von der Leistungsfähigkeit der Berechnungseinheit und/oder einer gewünschten Vorausschau des Verfahrens kann ein Berechnungshorizont gewählt werden, der die Abfolge einer Anzahl n Straßenabschnitte vorgibt. So kann beispielsweise vorgegeben werden, dass nicht nur die nächste Abbiegemöglichkeit zur Bestimmung des Nutzwertes, sondern beispielsweise drei aufeinander folgende Abbiegemöglichkeiten (n = 3) zur Bestimmung der weiteren Erprobungsroute berücksichtigt werden sollen. In diesem Fall wird also die Anzahl der für den gerade befahrenen Straßenabschnitt vorhandenen Abbiegemöglichkeiten aus der Speichereinheit abgerufen, und für jeden der sich daran anschließenden Straßenabschnitte wiederum sämtliche Abbiegemöglichkeiten und so weiter, bis alle Abbiegemöglichkeiten für die dem aktuell befahrenen Straßenabschnitt folgenden drei Kreuzungspunkte, an denen sich Abbiegemöglichkeiten ergeben, bestimmt wurden. Für jeden dieser Straßenabschnitte liegen Straßeninformationen und erwartbare Belastungen vor, so dass für jeden der Straßenabschnitte ein Teilnutzwert ermittelt werden kann. Aus den Teilnutzwerten der einzelnen Straßenabschnitte wird für sämtliche der möglichen Kombinationen ein Nutzwert, der also ein Gesamtnutzwert für die jeweiligen Straßenabschnittskombinationen ist, ermittelt. Dies kann durch aufaddieren, oder aber durch eine gewichtete Kombination der einzelnen Teilnutzwerte unter vorgegebenen Bedingungen erfolgen. Durch eine Wichtung kann zum Beispiel erreicht werden, dass weiter entfernte Straßenabschnitte einen geringeren Einfluss auf den Gesamtnutzwert für die jeweiligen Straßenabschnittskombinationen haben.

Zur Bestimmung der Teilnutzwerte sollte vorteilhafterweise anhand der Straßeninformationen und der erwartbaren Belastungen auch ein voraussichtlicher aktualisierter Erprobungsstand für jeden Straßenabschnitt bestimmt werden, so dass für jede der möglichen Straßenabschnittskombinationen ein voraussichtlicher aktualisierter Gesamterprobungsstand ermittelt wird und mit dem Belastungszielwert abgeglichen werden kann.

Durch den Vergleich der Gesamtnutzwerte der einzelnen Straßenabschnittskombinationen wird dann der höchste Gesamtnutzwert und damit die geeignetste Straßenabschnittskombination zum Erreichen das Belastungszielwertes ausgewählt. Die auf diese Weise ausgewählte Straßenabschnittskombination muss im weiteren Verlauf nicht festgesetzt sein, sondern kann vorteilhafterweise nach jedem befahrenen Straßenabschnitt neu bestimmt werden. Dies ist sinnvoll, da einerseits während des Befahrens eines Straßenabschnittes Unterschiede zwischen erwarteten und tatsächlich aufgetretenen Belastungen eintreten können, und andererseits stets der Berechnungshorizont von n als Vorausschau gewahrt bleibt.

Dabei kann zunächst nur die Auswahl des nächsten gewählten, als des nächsten zu befahrenden Straßenabschnittes an den Fahrer des Fahrzeugs übermittelt werden. Um ein vorausschauenderes Fahren zu ermöglichen, können dem Fahrer aber auch die nachfolgend präferierten Straßenabschnitte als Zusatzinformation zur Verfügung gestellt werden.

Diese Ausbildung des erfindungsgemäßen Verfahrens erlaubt eine vorausschauende Betrachtung der Erprobungsfahrt unter Berücksichtigung möglicher äußerer Vorgaben. Durch dieses Vorgehen kann aber auch erreicht werden, dass ein Fahrzeug nicht eine Abbiegemöglichkeit nutzt, die für einen nachfolgenden Straßenabschnitt einen hohen Nutzwert erreicht, danach aber nur noch Straßenabschnitte durchfahren werden können, die jeweils nur geringe Nutzwerte erreichen, so dass die Erprobungsfahrt in ihrer Gesamtheit nur eine geringe Fortschreibung des Erprobungsstandes bewirkt und damit nur wenig zum Erreichen des Belastungszielwertes beiträgt. Außerdem kann dieses Vorgehen auch angewendet werden, um anhand der erwartbaren Belastungen eine Route einer Erprobungsfahrt zu simulieren und so virtuell vorauszuplanen, und dabei die bereits in das Fahrzeug eingetragenen Belastungen zu berücksichtigen.

Zusätzlich oder alternativ kann das hier offenbarte Verfahren auch genutzt werden, um eine Route vorzuschlagen, auf der ein möglichst geringer Belastungseintrag auf das Fahrzeug erfolgt. Insbesondere kann diese Ausführungsvariante verwirklicht werden, indem der Nutzwert eines Straßenabschnittes im Hinblick auf einen möglichst geringen Belastungseintrag bestimmt wird, und Straßenabschnitte für den weiteren Verlauf der Erprobungsroute ausgewählt werden, die einen Nutzwert aufweisen, der mit einer möglichst geringen Belastung für das Fahrzeug korrespondiert. Der Nutzwert eines Straßenabschnittes wird also derart berechnet, dass die eingetragenen Belastungen möglichst gering sind. Eine derartige Verwendung des Verfahrens könnte mit Vorteil durch Fahrer eines Fahrzeugs genutzt werden, die das Fahrzeug möglichst schonend fahren wollen, um seine Langlebigkeit zu erhöhen und den Verschleiß des Fahrzeugs und seiner Komponenten zu minimieren. Auch der Fahrkomfort während der Fahrt kann eine Motivation für die Auswahl einer Route mit geringem Belastungseintrag sein. Insbesondere im Hinblick auf das autonome Fahren, bei dem sich die Fahrzeuginsassen ausruhen oder anderweitig beschäftigen, kann dies bedeutsam sein. Da die Augen des Fahrzeuginsassen nicht mehr aktiv der vorbeiziehenden Landschaft folgen und somit im Gegensatz zum Gleichgewichtssinn die eigene Fortbewegung nicht registrieren, kann es zu Disharmonie zwischen den beiden Sinneswahrnehmungen mit Unwohlsein als Folge kommen. Deshalb ist eine schonende, komfortable Fahrweise für das autonome Fahren besonders wichtig.

Eine erfindungsgemäße Vorrichtung zur Bestimmung einer weiteren Erprobungsroute für ein Fahrzeug zum Erreichen eines Belastungszielwertes während einer Erprobungsfahrt anhand von in das Fahrzeug eingetragenen Belastungen, ist mit einer Speichereinheit, mit der Straßeninformationen, erwartbare Belastungen für das Fahrzeug und ein Erprobungsstand des Fahrzeugs abrufbar und hinterlegbar sind, und einer Berechnungseinheit ausgebildet, die zur Durchführung des vorstehend erfindungsgemäßen Verfahrens ausgebildet ist.

Die Speichereinrichtung ist also so ausgebildet, dass darin Straßeninformationen, erwartbare Belastungen für das Fahrzeug und ein Erprobungsstand des Fahrzeugs abrufbar gespeichert sind und abgerufen werden können, und dass auch derartige Informationen in der Speichereinrichtung hinterlegt werden können. Dies erlaubt die Verwendung der hinterlegten Informationen für das vorstehend ausgeführte Verfahren, aber auch ihre Aktualisierung, Ergänzung und Fortschreibung.

Die Berechnungseinheit ist dabei ausgebildet, Positionsdaten und Sensordaten zu ermitteln oder zu empfangen, Straßeninformationen aus der Speichereinheit abzurufen, mit den Positionsdaten und den Sensordaten zu verknüpfen und daraus einen Belastungskennwert zu ermitteln. Sie ist auch dazu ausgebildet, einen Erprobungsstand aus der Speichereinrichtung abzurufen und mit dem Belastungskennwert einen aktualisierten Erprobungsstand zu bestimmen und in der Speichereinrichtung zu hinterlegen. Schließlich ist die Berechnungseinheit ausgebildet, die weitere Erprobungsroute wie zuvor beschrieben zu bestimmen, indem sie die Abbiegemöglichkeiten eines Straßenabschnittes aus der Speichereinrichtung abruft, einen Nutzwert für jede Abbiegemöglichkeit ermittelt und die Abbiegemöglichkeit mit dem höchsten Nutzwert auswählt.

Die erfindungsgemäße Vorrichtung kann eine Positionserfassungseinrichtung zur Bestimmung einer Position des Fahrzeugs und/oder eine Sensoreinrichtung zur Erfassung von in das Fahrzeug eingetragenen Belastungen und/oder eine Ausgabeeinheit zur Übermittlung der ausgewählten Abbiegemöglichkeit an einen Fahrer des Fahrzeugs aufweisen. Die erfindungsgemäße Vorrichtung kann also selbst mit einer Positionserfassungseinrichtung und/oder einer Sensoreinrichtung und/oder einer Ausgabeeinheit ausgebildet sein, sie kann aber gleichzeitig oder alternativ mit einer oder mehreren dieser Einrichtungen beziehungsweise Einheiten verbunden sein. Ist die Berechnungseinheit mit einer oder mehreren dieser Einrichtungen beziehungsweise Einheiten verbunden, sollten diese geeignete Datenschnittstellen bereitstellen, um einen Datenaustausch, also eine Bereitstellung der Messwerte beziehungsweise Daten der Einrichtungen beziehungsweise Einheiten an die Berechnungseinheit zu ermöglichen. Die separate Ausbildung der genannten Einrichtungen beziehungsweise Einheiten erlaubt es, dass die Berechnungseinheit kompakter ausgebildet werden kann und beispielsweise auch mit wechselnden Einrichtungen beziehungsweise Einheiten zusammenwirken kann, so dass diese an die jeweiligen Anforderungen angepasst werden können, zum Beispiel im Hinblick auf die Erfassungsgenauigkeit, oder dass sie bei Defekt einfach ausgetauscht werden können.

In der Vorrichtung ist in einer bevorzugten Ausgestaltung die Speichereinrichtung mit einer Datenbank zum Speichern von Straßeninformationen und/oder einer Datenbank zum Speichern von Belastungskennwerten gebildet. Demnach soll also in der Speichereinheit eine Datenbank zum Hinterlegen der charakteristischen Straßeninformationen vorgesehen sein. Zusätzlich oder alternativ kann eine Datenbank zum Speichern von Belastungskennwerten in der Speichereinrichtung vorhanden sein. Die Speichereinrichtung kann auch weitere Speicherstrukturen aufweisen, die zum Speichern beziehungsweise Hinterlegen verschiedenster Informationen vorgesehen sind. So kann eine eigene Speicherstruktur zum Speichern beziehungsweise zur Dokumentation des aktualisierten Erprobungsstandes verwirklicht werden. Die separate Ausbildung einzelner Speicherstrukturen und/oder Datenbanken hat den Vorteil, dass die jeweilige Struktur individuell auf den Bedarf der jeweiligen Datensammlung angepasst werden kann, ohne dabei Einschränkungen aufgrund der übrigen Datenstrukturen zu erfahren und ohne zu komplex zu werden. Zudem können so einfach und gezielt Datenexporte durchgeführt werden, um beispielsweise die Daten über die erwartbaren Belastungen in ein Fahrzeug mit im Wesentlichen ähnlichen Eigenschaften zu übertragen.

Beansprucht ist auch ein Computerprogrammprodukt zur Durchführung des erfindungsgemäßen Verfahrens, in vorteilhafter Weise mit einer erfindungsgemäßen Vorrichtung. Dies soll auch ein System, einen Datenträger und eine Software einschließen, die zur Ausführung des erfindungsgemäßen Verfahrens geeignet beziehungsweise ausgebildet sind.

Die verschiedenen in dieser Anmeldung genannten Ausführungsformen der Erfindung sind, sofern im Einzelfall nicht anders ausgeführt, mit Vorteil miteinander kombinierbar.

Das erfindungsgemäße Verfahren und seine Ausführung auf einer erfindungsgemäßen Vorrichtung und/oder mit dem erfindungsgemäßen Computerprogrammprodukt hat eine Vielzahl von Vorteilen.

Bei der Gestaltung einer Erprobungsroute musste bisher zwischen den verschiedenen abzuprüfenden Belastungsarten stets ein Kompromiss getroffen werden. Mit einer Erprobungsvorgabe auf Basis konkreter, also tatsächlich eingetragener Belastungen lässt sich die Erprobung somit deutlich präzisieren und nach Fahrzeugtyp separieren.

Der Dauerfahrversuch von Fahrzeugen wird wesentlich flexibilisiert, so dass keine von vornherein festgelegte Erprobungsroute zyklisch abgefahren werden muss. Durch die optionale Verwendung öffentlicher Straßen kann das Erprobungsgebiet zudem deutlich vergrößert werden. Zudem ist zu erwarten, dass die Erprobung weniger monoton für den Erprobungsfahrer und deutlich realitätsnäher ist.

Der Belastungszielwert kann insgesamt oder für einzelne Belastungsarten vorgegeben werden. Der Erprobungsstand und der Abgleich mit dem Belastungszielwert erfolgt nicht mehr anhand der Laufleistung eines Fahrzeugs, sondern anhand tatsächlich in das Fahrzeug eingetragener Belastungen. Durch die belastungsorientierte Bewertung anstelle der laufleistungsorientierten Bewertung des Erprobungsfortschritts wird das tatsächliche Erfüllen der Erprobungsanforderungen gewährleistet. Insgesamt verbessert sich die Erprobungsqualität somit signifikant. Dies führt zu einer höheren Produktsicherheit für den Kunden und lässt geringere Gewährleistungskosten für den Hersteller erwarten.

Diese eingetragenen Belastungen werden mit den Straßeninformationen positionsgenau korreliert und zur Ergänzung und/oder Aktualisierung von erwartbaren Belastungen der Straßenabschnitte verwendet, so dass eine sehr gute Abschätzung des zu erwartenden Belastungseintrages möglich ist.

Die Erfindung wird nachfolgend in Ausführungsbeispielen anhand der zugehörigen Zeichnungen erläutert. Es zeigen:
- Figur 1: eine beispielhafte Ausgestaltung der erfindungsgemäßen Vorrichtung in einer schematischen Darstellung, und
- Figur 2: das prinzipielle Vorgehen beim Bestimmen der weiteren Erprobungsroute.

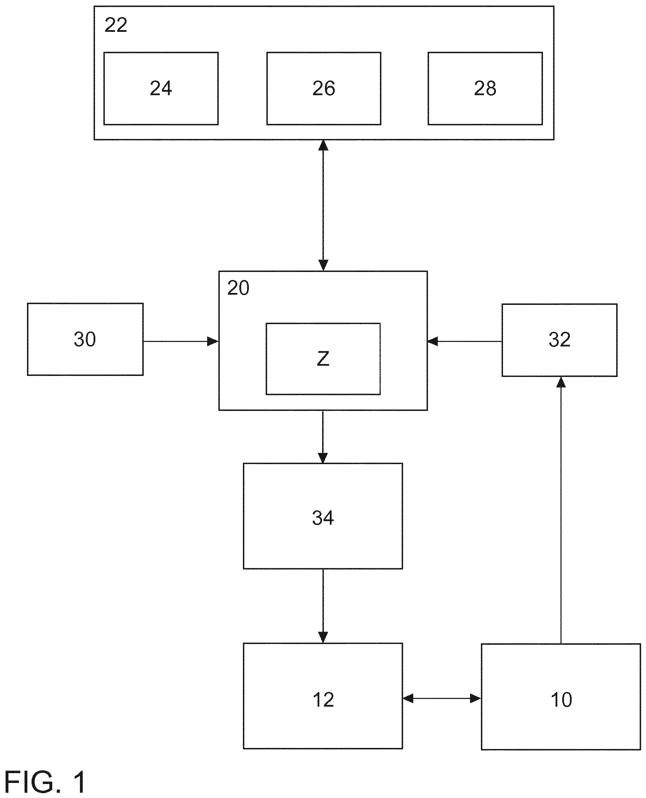

Figur 1 zeigt in einer beispielhaften Ausgestaltung den Ablauf des erfindungsgemäßen Verfahrens und das Zusammenwirken der Komponenten der erfindungsgemäßen Vorrichtung.

Die erfindungsgemäße Vorrichtung weist eine Berechnungseinheit 20 auf, in der ein Belastungszielwert Z vorgegeben und hinterlegt ist. Außerdem weist die Vorrichtung eine Speichereinrichtung 22, eine Positionsbestimmungseinrichtung 30, eine Sensoreinrichtung 32 und eine Ausgabeeinheit 34 auf. Die Positionsbestimmungseinrichtung 30 und/oder die Sensoreinrichtung 32 können in einer alternativen Ausgestaltung aber auch als separate, und nur mit der Berechnungseinheit 22 verbundene Elemente der Vorrichtung ausgebildet sein. Gleiches gilt für die Ausgabeeinheit 34.

Durch Pfeile zwischen den Komponenten der Vorrichtung wird das Zusammenwirken veranschaulicht. So bedeutet ein Pfeil mit einer Pfeilspitze, dass Daten oder Informationen nur in der mit dem Pfeil gezeigten Richtung übermittelt werden, ein Pfeil mit Doppelspitze bedeutet eine Übermittlung oder einen Austausch in beide Richtungen.

Die Speichereinrichtung 22 ist mit einer Datenbank 24 zum Speichern von Straßeninformationen, einer Datenbank 26 zum Speichern von Belastungskennwerten K und einer Speicherstruktur 28 zum Hinterlegen eines aktualisierten Erprobungsstandes Eᵢ₊₁ gebildet.

Während einer Erprobungsfahrt erfasst die Positionsbestimmungseinrichtung 30 eine aktuelle Position des Fahrzeugs 10 auf einem Straßenabschnitt 50 und übermittelt diese an die Berechnungseinheit 20. Anhand der Position ruft die Berechnungseinheit 20 Straßeninformationen aus der Datenbank 24 zu diesem Straßenabschnitt 50 ab, die charakteristische Merkmale des Straßenabschnittes 50 beinhalten. Dies können Straßentyp, zulässige Höchstgeschwindigkeit, Länge, Krümmung, Neigung, Untergrundmaterial, Untergrundrauigkeit und/oder vorhandene Hindernisse sein.

Gleichzeitig bestimmt die Sensoreinrichtung 32 Messwerte, die durch die Einwirkungen während der Fahrt auf dem Straßenabschnitt 50 entstehen, und übermittelt diese an die Berechnungseinheit 20. Die Position des Fahrzeugs 10, die zugehörigen Straßeninformationen und die Sensordaten werden miteinander verknüpft und ein Belastungskennwert K für mindestens eine Belastungsart bestimmt, der die tatsächlich in das Fahrzeug 10 eingetragenen Belastungen B beschreibt. Dieser Belastungskennwert K wird in die Datenbank 26 übermittelt und dort gespeichert.

Nun wird der Erprobungsstand Eᵢ aus der Speicherstruktur 28 abgerufen. Aus dem Erprobungsstand Eᵢ und dem Belastungskennwert K wird ein aktualisierter Erprobungsstand Eᵢ₊₁ ermittelt. Der aktualisierte Erprobungsstand Eᵢ₊₁ wird in die Speicherstruktur 28 übertragen und dort fortlaufend und mit einem sogenannten Zeitstempel, der Datum, Uhrzeit und/oder Laufleistung des Fahrzeugs des ermittelten Erprobungsstandes Eᵢ₊₁ beinhaltet, abgespeichert.

Zur Bestimmung der weiteren Erprobungsroute für das Fahrzeug 10 werden nun durch die Berechnungseinheit 20 die Abbiegemöglichkeiten 52 am Ende des Straßenabschnittes 50 aus der Datenbank 24 abgerufen. Anhand der in der Datenbank 24 hinterlegten Straßeninformationen und der in der Datenbank 26 hinterlegten erwartbaren Belastungen K_{E} wird für jede Abbiegemöglichkeit 52 ein Nutzwert N der Abbiegemöglichkeit 52 zum Erreichen des Belastungszielwertes Z bestimmt. Die erwartbaren Belastungen K_{E} wurden bei früheren Fahrten des Fahrzeugs 10 ermittelt.

Die Abbiegemöglichkeit 52 mit dem höchsten Nutzwert N zum Erreichen des Belastungszielwertes Z wird ausgewählt und über die Ausgabeeinheit 34 an den Fahrer 12 des Fahrzeugs 10 visuell, akustisch und/oder taktil übermittelt. Die Ausgabeeinheit 34 kann beispielsweise eine Anzeigeeinrichtung sein, auf der die Information visuell übermittelt wird und/oder aber akustisch über eine Ansage an den Fahrer 12.

Der Fahrer 12 führt die Erprobungsroute wie vorgegeben fort, so dass neue Einwirkungen auf die Sensoreinrichtung 32 entstehen und die Berechnungseinheit 20 für einen nächsten Straßenabschnitt 50 das Verfahren erneut durchführt.

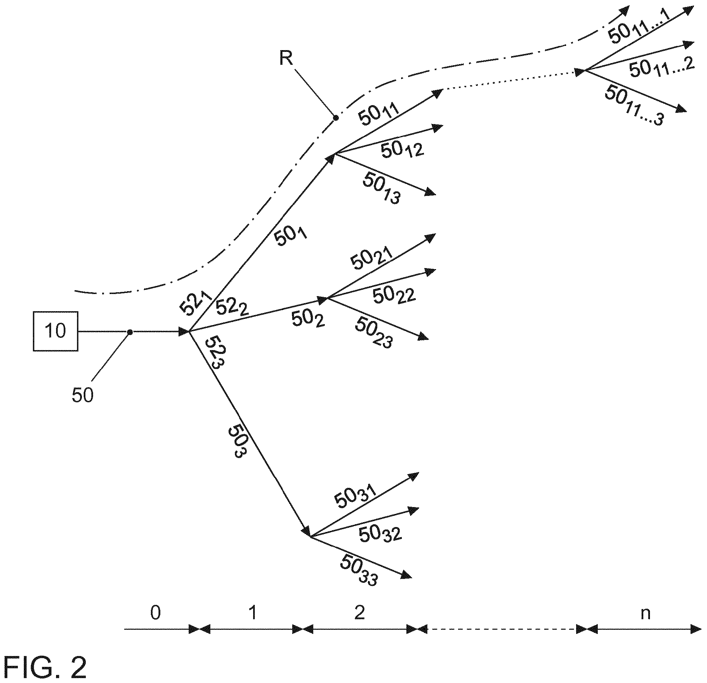

Das erfindungsgemäße Verfahren kann nicht nur für einen nachfolgenden Straßenabschnitt 50 auf der Erprobungsroute durchgeführt werden, sondern auch für eine Anzahl n nachfolgender Straßenabschnitte 50, wie anhand von Figur 2 nachfolgend beispielhaft beschrieben wird.

Dabei befindet sich ein Fahrzeug 10 auf einem Straßenabschnitt 50. Zur Bestimmung der weiteren Erprobungsroute sollen n weitere Straßenabschnitte 50ᵢ berücksichtigt werden. Die Anzahl n beschreibt den Betrachtungshorizont und ist im unteren Bereich von Figur 2 als Abfolge von Doppelpfeilen veranschaulicht.

Die Anzahl n kann so gewählt sein, dass eine gewünschte Prognosegüte zum Erreichen des Belastungszielwertes Z erreicht wird. Sie kann aber auch durch die verfügbare Rechenleistung der Berechnungseinheit 20 begrenzt sein. Sobald das Fahrzeug einen neuen Straßenabschnitt 50 befährt, wird für diesen Straßenabschnitt 50 die Anzahl der Abbiegemöglichkeiten 52 bestimmt. Zur besseren Erläuterung werden sie nachfolgend mit Indizes versehen. Dargestellt sind im vorliegenden Beispiel drei Abbiegemöglichkeiten 52₁, 52₂ und 52₃ am Ende des aktuellen Straßenabschnittes 50. Es kann jedoch auch jede andere Anzahl von Abbiegemöglichkeiten 52 vorliegen.

Für jeden der Straßenabschnitte 50₁, 50₂ und 50₃, die an den Abbiegemöglichkeiten 52₁, 52₂ und 52₃ ausgebildet werden, wird jeweils ein Teilnutzwert N₁, N₂ und N₃ bestimmt. Zudem wird am Ende dieser Straßenabschnitte 50₁, 50₂ und 50₃ jeweils die Anzahl der nächsten Abbiegemöglichkeiten 52₁ᵢ, 52₂ᵢ und 52₃ᵢ ermittelt. Deren Index wird zur Veranschaulichung dem Index der vorherigen Abbiegemöglichkeit 52₁, 52₂ und 52₃ hinzugefügt. Zur besseren Übersichtlichkeit der Figur 2 sind die weiteren Abbiegemöglichkeiten 52ᵢ nicht separat gekennzeichnet, sondern lediglich die damit gebildeten Straßenabschnitte 50ᵢ. Aus Figur 2 lässt sich anhand der Indizes verfolgen, welche Abbiegemöglichkeiten 52ᵢ jeweils gewählt wurden.

Diese Schritte werden fortlaufend wiederholt, bis eine Anzahl n nachfolgender Straßenabschnitte 50ᵢ für jede so gebildete Straßenabschnittskombination erreicht wird.

Für jeden der so bestimmten Straßenabschnitte 50ᵢ wird wieder ein Teilnutzwert Nᵢ ermittelt. Aus den Teilnutzwerten Nᵢ jeder möglichen Straßenabschnittskombination wird ein Nutzwert der Kombination errechnet, vorzugsweise unter Verwendung einer Wichtung, die weiter entfernte Straßenabschnitte 50ᵢ mit einer geringeren Wichtung einbezieht. Unter weiter entfernt sollen Straßenabschnitte verstanden sein, die im Wesentlichen näher am Betrachtungshorizont liegen.

Zusätzlich wird schrittweise für jeden der Straßenabschnitte 50ᵢ ein aktualisierter Erprobungsstand Eᵢ₊₁ abgeschätzt. Dazu wird ein bis zu einem jeweiligen Straßenabschnitt 50ᵢ voraussichtlich erreichter Erprobungsstand Eᵢ bestimmt. Bei dessen Bestimmung werden die erwartbaren Belastungen K_{E} und die Straßeninformationen zu jedem der bis dahin zu befahrenen Straßenabschnitte 50ᵢ berücksichtigt und der sich ergebende voraussichtliche Belastungskennwert Kᵢ zu dem zuvor abgeschätzten Erprobungsstand Eᵢ hinzugerechnet, um den voraussichtlichen aktualisierten Erprobungsstand Eᵢ₊₁ abzuschätzen.

Aus der Gesamtheit der Nutzwerte aller sich ergebenden Straßenabschnittskombinationen auf Basis der abgeschätzten aktualisierten Erprobungsstände Eᵢ₊₁ kann die Straßenabschnittskombination mit dem höchsten Nutzwert N ausgewählt werden. In Figur 2 ist die ausgewählte Erprobungsroute R durch einen Pfeil in Strich-Punkt-Linierung dargestellt. Diese ausgewählte Erprobungsroute R kann nun ganz oder teilweise an den Fahrer 12 des Fahrzeugs 10 übermittelt werden.

### Bezugszeichenliste

- 10: Fahrzeug
- 12: Fahrer
- 20: Berechnungseinheit
- 22: Speichereinrichtung
- 24: Datenbank zum Speichern von Straßeninformationen
- 26: Datenbank zum Speichern von Belastungskennwerten (K)
- 28: Speicherstruktur zur Hinterlegung des aktualisierten Erprobungsstandes (Eᵢ₊₁)
- 30: Positionsbestimmungseinrichtung
- 32: Sensoreinrichtung
- 34: Ausgabeeinheit
- 50: Straßenabschnitt
- 52: Abbiegemöglichkeit
- B: Belastung
- Eᵢ: Erprobungsstand
- Eᵢ₊₁: aktualisierter Erprobungsstand
- K: Belastungskennwert
- K_{E}: erwartbare Belastung
- N: Nutzwert
- R: ausgewählte Erprobungsroute
- Z: Belastungszielwert

## Patentansprüche

1. Verfahren zur Bestimmung einer weiteren Erprobungsroute für ein Fahrzeug (10) zum Erreichen eines Belastungszielwertes (Z) während einer Erprobungsfahrt anhand von in das Fahrzeug (10) eingetragenen Belastungen (B), wobei mittels einer Berechnungseinheit (20) mindestens die folgenden Schritte ausgeführt werden:
Verknüpfung einer von einer Positionsbestimmungseinrichtung (30) ermittelten Position des Fahrzeugs (10) auf einem Straßenabschnitt (50), Straßeninformationen über diesen Straßenabschnitt (50) aus einer Speichereinrichtung (22) und von in das Fahrzeug (10) eingetragenen mittels einer Sensoreinrichtung (32) erfassten Belastungen (B) zur Bestimmung eines Belastungskennwertes (K) für diesen Straßenabschnitt (50),
Abrufen eines Erprobungsstandes (Eᵢ) des Fahrzeugs (10) aus der Speichereinrichtung (22),
Berechnung eines aktualisierten Erprobungsstandes (Eᵢ₊₁) des Fahrzeugs (10) aus dem abgerufenen Erprobungsstand (Eᵢ) und dem Belastungskennwert (K), und Hinterlegen des aktualisierten Erprobungsstandes (Eᵢ₊₁) in der Speichereinrichtung (22),
Bestimmung von Abbiegemöglichkeiten (52) am Ende des Straßenabschnitts (50) und eines Nutzwertes (N) jeder der Abbiegemöglichkeiten (52) zum Erreichen des Belastungszielwertes (Z) anhand der Straßeninformationen und in der Speichereinrichtung (22) hinterlegten erwartbaren Belastungen (K_{E}) für das Fahrzeug (10),
Auswahl der Abbiegemöglichkeit (52) mit dem höchsten Nutzwert (N) zum Erreichen des Belastungszielwertes (Z).

2. Verfahren nach Anspruch 1, **dadurch gekennzeichnet, dass** die Abbiegemöglichkeit (52) mit dem höchsten Nutzwert (N) auf einer Ausgabeeinheit (34) an einen Fahrer (12) des Fahrzeugs (10) ausgegeben wird.

3. Verfahren nach Anspruch 1 oder 2, **dadurch gekennzeichnet, dass** der ermittelte Belastungskennwert (K) eines Straßenabschnittes (50) in der Speichereinrichtung (22) hinterlegt wird.

4. Verfahren nach einem der vorhergehenden Ansprüche, **dadurch gekennzeichnet, dass** die erwartbaren Belastungen (K_{E}) für das Fahrzeug (10) durch frühere Erprobungsfahrten ermittelt wurden.

5. Verfahren nach einem der vorhergehenden Ansprüche, **dadurch gekennzeichnet, dass** die Straßeninformationen charakteristische Informationen eines Straßenabschnittes (50), insbesondere Name der Straße, zugehörige GPS-Koordinaten, Straßentyp, zulässige Höchstgeschwindigkeit, Länge, Krümmung, Neigung, Untergrundmaterial, Untergrundrauigkeit, vorhandene Hindernisse, das Wetter während einer früheren Erprobungsfahrt und/oder die Verkehrsdichte während einer früheren Erprobungsfahrt, enthalten.

6. Verfahren nach einem der vorhergehenden Ansprüche, **dadurch gekennzeichnet, dass** für jede Abbiegemöglichkeit (52) von n aufeinanderfolgenden Straßenabschnitten (50ᵢ) ein Teilnutzwert (Nᵢ) und daraus für jede Kombination der n aufeinanderfolgenden Straßenabschnitte (50ᵢ) ein Nutzwert (N) ermittelt wird, und die Kombination mit dem höchsten Nutzwert (N) zum Erreichen des Belastungszielwertes (Z) ausgewählt wird.

7. Vorrichtung zur Bestimmung einer weiteren Erprobungsroute für ein Fahrzeug (10) zum Erreichen eines Belastungszielwertes (Z) während einer Erprobungsfahrt anhand von in das Fahrzeug (10) eingetragenen Belastungen (B), mit
einer Speichereinrichtung (22), mit der Straßeninformationen, erwartbare Belastungen (K_{E}) für das Fahrzeug (10) und ein Erprobungsstand (Eᵢ) des Fahrzeugs (10) abrufbar und hinterlegbar sind, und
einer Berechnungseinheit (20) ausgebildet zur Durchführung eines Verfahrens nach einem der Ansprüche 1 bis 6.

8. Vorrichtung nach Anspruch 7, **dadurch gekennzeichnet, dass** sie eine Positionsbestimmungseinrichtung (30) zur Bestimmung einer Position des Fahrzeugs (10) und/oder eine Sensoreinrichtung (32) zur Erfassung von in das Fahrzeug (10) eingetragenen Belastungen (B) und/oder eine Ausgabeeinheit (34) zur Übermittlung der ausgewählten Abbiegemöglichkeit (52) an einen Fahrer (12) des Fahrzeugs (10) aufweist.

9. Vorrichtung nach Anspruch 7 oder 8, **dadurch gekennzeichnet, dass** die Speichereinrichtung (22) mit einer Datenbank (24) zum Speichern von Straßeninformationen und/oder einer Datenbank (26) zum Speichern von Belastungskennwerten (K) gebildet ist.

10. Computerprogrammprodukt zur Durchführung eines Verfahrens nach einem der Ansprüche 1 bis 6.

## Claims

1. A method for determining a further test route for a vehicle (10) for achieving a load target value (Z) during a test drive on the basis of loads (B) introduced into the vehicle (10), wherein at least the following steps are carried out by means of a calculation unit (20):
linking a position of the vehicle (10) on a road section (50) as ascertained by a position determination device (30), road information about this road section (50) from a memory device (22), and loads (B) introduced into the vehicle (10) and detected by means of a sensor device (32) in order to determine a load characteristic value (K) for said road section (50),
retrieving a test status (Eᵢ) of the vehicle (10) from the memory device (22),
calculating an updated test status (Eᵢ₊₁) of the vehicle (10) from the retrieved test status (Eᵢ) and the load characteristic value (K), and storing the updated test status (Eᵢ₊₁) in the memory device (22),
determining turning possibilities (52) at the end of the road section (50) and a useful value (N) of each of the turning possibilities (52) for achieving the load target value (Z) on the basis of the road information and expected loads (K_{E}) stored in the memory device (22) for the vehicle (10),
selecting the turning possibility (52) with the highest useful value (N) for achieving the load target value (Z).

2. The method according to Claim 1, **characterized in that** the turning possibility (52) with the highest useful value (N) is output to a driver (12) of the vehicle (10) on an output unit (34).

3. The method according to Claim 1 or 2, **characterized in that** the ascertained load characteristic value (K) of a road section (50) is stored in the memory device (22).

4. The method according to one of the preceding claims, **characterized in that** the expected loads (K_{E}) for the vehicle (10) were ascertained in previous test drives.

5. The method according to one of the preceding claims, **characterized in that** the road information contains characteristic information of a road section (50), in particular the name of the road, associated GPS coordinates, road type, permissible maximum speed, length, curvature, inclination, roadbed material, roadbed roughness, existing obstacles, the weather during an earlier test drive, and/or the traffic density during an earlier test drive.

6. The method according to one of the preceding claims, **characterized in that** a partial useful value (Nᵢ) is ascertained for each turning possibility (52) of n successive road sections (50ᵢ) and a useful value (N) is ascertained therefrom for each combination of the n successive road sections (50ᵢ), and the combination with the highest useful value (N) is selected for achieving the load target value (Z).

7. A device for determining a further test route for a vehicle (10) for achieving a load target value (Z) during a test drive on the basis of loads (B) introduced into the vehicle (10), comprising
a memory device (22) with which road information, expected loads (K_{E}) for the vehicle (10), and a test status (Ei) of the vehicle (10) can be retrieved and stored, and
a calculation unit (20) designed to carry out a method according to one of Claims 1 to 6.

8. The device according to Claim 7, **characterized in that** it has a position determination device (30) for determining a position of the vehicle (10) and/or a sensor device (32) for detecting loads (B) introduced into the vehicle (10), and/or an output unit (34) for transmitting the selected turning possibility (52) to a driver (12) of the vehicle (10).

9. The device according to Claim 7 or 8, **characterized in that** the memory device (22) is formed with a database (24) for storing road information, and/or a database (26) for storing load characteristic values (K).

10. A computer program product for performing a method according to one of Claims 1 to 6.

## Revendications

1. Procédé de détermination d'une autre voie d'essai pour un véhicule (10) pour l'atteinte d'une valeur de charge cible (Z) pendant une conduite d'essai au moyen des charges (B) enregistrées dans le véhicule (10), les étapes suivantes étant au moins exécutées au moyen d'une unité de calcul (20) :
liaison d'une position du véhicule (10) sur une section de route (50) déterminée par un dispositif de détermination de position (30), d'informations routières sur cette section de route (50) provenant d'un moyen de stockage (22) et de charges (B) enregistrées dans le véhicule (10) détectées au moyen d'un dispositif capteur (32) pour la détermination d'une valeur caractéristique de charge (K) pour cette section de route (50),
récupération d'un état d'essai (Eᵢ) du véhicule (110) à partir du moyen de stockage (22),
calcul de l'état d'essai (Eᵢ₊₁) actualisé du véhicule (10) à partir de l'état d'essai (Eᵢ) récupéré et de la valeur caractéristique de charge (K), et dépôt de l'état d'essai (Eᵢ₊₁) actualisé dans le moyen de stockage (22),
détermination de possibilités d'obliquer (52) à la fin de la section de route (50) et d'une valeur d'utilité (N) de chacune des possibilités d'obliquer (52) pour l'atteinte d'une valeur de charge cible (Z) au moyen des informations routières et des charges (K_{E}) attendues pour le véhicule (10) déposées dans le moyen de stockage (22),
sélection de la possibilité d'obliquer (52) ayant la plus grande valeur d'utilité (N) pour l'atteinte de la valeur de charge cible (Z).

2. Procédé selon la revendication 1, **caractérisé en ce que** la possibilité d'obliquer (52) ayant la plus grande valeur d'utilité (N) est sortie sur une unité de sortie (34) à l'attention d'un conducteur (12) du véhicule (10).

3. Procédé selon la revendication 1 ou 2, **caractérisé en ce que** la valeur caractéristique de charge (K) déterminée d'une section de route (50) est déposée dans le moyen de stockage (22).

4. Procédé selon l'une quelconque des revendications précédentes, **caractérisé en ce que** les charges (K_{E}) attendues pour le véhicule (10) ont été déterminées par des conduites d'essai antérieures.

5. Procédé selon l'une quelconque des revendications précédentes, **caractérisé en ce que** les informations routières contiennent des informations caractéristiques d'une section de route (50), en particulier le nom de la rue, les coordonnées GPS associées, le type de route, la vitesse maximale autorisée, la longueur, la courbure, l'inclinaison, le matériau de base, la rugosité, les obstacles existants, les conditions météorologiques pendant une conduite d'essai antérieure et/ou la densité du trafic pendant une conduite d'essai antérieure.

6. Procédé selon l'une quelconque des revendications précédentes, **caractérisé en ce que,** pour chaque possibilité d'obliquer (52) de n sections de routes (50) consécutives, une valeur d'utilité partielle (Nᵢ) est déterminée et, à partir de celle-ci, pour chaque combinaison des n sections de route (50ᵢ) consécutives, une valeur d'utilité (N) est déterminée, et la combinaison présentant la plus grande valeur d'utilité (N) est sélectionnée pour l'atteinte de la valeur de charge utile (Z).

7. Dispositif de détermination d'une autre voie d'essai pour un véhicule (10) pour l'atteinte d'une valeur de charge cible (Z) pendant une conduite d'essai au moyen des charges (B) enregistrées dans le véhicule (10), comprenant :
un moyen de stockage (22) au moyen duquel des informations routières, des charges (K_{E}) attendues pour le véhicule (10) et un état d'essai (Ei) du véhicule (10) peuvent être récupérés et déposés, et
une unité de calcul (20) conçue pour l'exécution d'un procédé selon l'une quelconque des revendications 1 à 6.

8. Dispositif selon la revendication 7, **caractérisé en ce qu'**il présente un dispositif de détermination de position (30) pour la détermination d'une position du véhicule (10) et/ou un dispositif capteur (32) pour la détection des charges (B) enregistrées dans le véhicule (10) et/ou une unité de sortie (34) pour la transmission de la possibilité d'obliquer (52) sélectionnée à un conducteur (12) du véhicule (10).

9. Dispositif selon la revendication 7 ou 8, **caractérisé en ce que** le moyen de stockage (22) est formé par une base de données (24) pour le stockage d'informations routières et/ou une base de données (26) pour le stockage de valeurs caractéristiques de charge (K).

10. Produit de programme informatique pour l'exécution d'un procédé selon l'une quelconque des revendications 1 à 6.
